(19) Europäisches Patentamt
European Patent Office
Office européen des brevets

(11) Veröffentlichungsnummer: **0 424 425 B1**

(12) # EUROPÄISCHE PATENTSCHRIFT

(45) Veröffentlichungstag der Patentschrift: **15.12.93**

(51) Int. Cl.$^5$: **C09K 19/38**

(21) Anmeldenummer: **89907719.2**

(22) Anmeldetag: **29.06.89**

(86) Internationale Anmeldenummer:
**PCT/EP89/00745**

(87) Internationale Veröffentlichungsnummer:
**WO 90/00584 (25.01.90 90/03)**

(54) **FERROELEKTRISCHE FLÜSSIGKRISTALLINE POLYMERE, EIN VERFAHREN ZU IHRER HERSTELLUNG UND IHRE VERWENDUNG IN ELEKTROOPTISCHEN BAUTEILEN.**

(30) Priorität: **08.07.88 DE 3823154**

(43) Veröffentlichungstag der Anmeldung:
**02.05.91 Patentblatt 91/18**

(45) Bekanntmachung des Hinweises auf die Patenterteilung:
**15.12.93 Patentblatt 93/50**

(84) Benannte Vertragsstaaten:
**AT BE CH DE FR GB IT LI NL SE**

(56) Entgegenhaltungen:
**EP-A- 0 228 703**
**EP-A- 0 271 900**

(73) Patentinhaber: **HOECHST AKTIENGESELL-SCHAFT**

**D-65926 Frankfurt(DE)**

(72) Erfinder: **SCHEROWSKY, Günter**
**Winklerstrasse 18B**
**D-1000 Berlin 33(DE)**
Erfinder: **SCHLIWA, Andreas**
**Spenerstrasse 14a**
**D-1000 Berlin 21(DE)**
Erfinder: **TRAPP, Wolfgang**
**Weimarstrasse 35**
**D-1000 Berlin 12(DE)**

**EP 0 424 425 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Flüssigkristalle haben in jüngerer Zeit Eingang in verschiedene technische Gebiete gefunden, in denen bestimmte elektro-optische Eigenschaften (z. B. kleine Ansteuerspannungen) in Verbindung mit bestimmten Anforderungen an Anzeige- oder Schaltvorrichtungen (z.B. flache Bauweise, geringes Gewicht) gefragt sind. Diese Vorrichtungen beruhen z.Z. auf dielektrischen Ausrichtungseffekten in nematischen, cholesterischen und/oder smektischen Flüssigkristallphasen, wobei die Lichtdurchlässigkeit oder -reflektivität der Vorrichtung von der angelegten elektrischen Spannung abhängt.

Ein Flüssigkristalldisplay besteht aus zwei Trägerplatten, vorzugsweise Glasplatten, die mit transparenten Elektroden und in der Regel mit einer oder zwei Orientierungsschichten beschichtet sind, zwischen denen sich die Flüssigkristallschicht befindet. Als weitere Komponenten sind Polarisatoren, Farbfilter, Passivierungs-, Antireflex-, Diffisionssperr- u.ä. Schichten gebräuchlich.

Während derzeit noch überwiegend nematische oder chloesterische Flüssigkristallphasen verwendet werden, haben seit einigen Jahren in zunehmendem Maße auch ferroelektrische, insbesondere smektische C*, Flüssigkristallphasen an Bedeutung gewonnen. Ferroelektrische Flüssigkristalle besitzen den Vorteil sehr kurzer Schaltzeiten und ermöglichen den Betrieb von hochauflösenden Bildschirmen ohne Zuhilfenahme elektronischer Elemente, wie z.B. Dünnschichttransistoren, die bei der Verwendung nematischer oder chloresterischer Flüssigkristallphasen erforderlich sind.

Bei allen genannten Anwendungen handelte es sich um niedermolekulare flüssigkristalline Verbindungen, d.h. mit Molmassen unterhalb von 2000 g/mol, vorzugsweise unterhalb von 800 g/mol, insbesondere aber nicht um Polymere, Copolymere, Polykondensate oder Copolykondensate. Wegen ihrer geringeren Viskosität besitzen niedermolekulare Flüssigkristalle im allgemeinen den Vorteil kurzer Schaltzeiten; dies gilt insbesondere für ferroelektrische Flüssigkristalle, deren Schaltzeiten im Bereich von µs liegen und die damit 10 bis 1000 mal schneller schalten als konventionelle nematische Flüssigkristallphasen.

Bei der Anwendung ferroelektrischer Flüssigkristalle kann jedoch das Problem der hohen Anfälligkeit der Orientierung hinsichtlich mechanischer Beanspruchung (Stoß, Schlag, Druck, thermische Verformung, Verbiegung usw.) auftreten, was zu einer irreversiblen Störung der Bildgualität eines Displays führen kann. Diese hohe Empfindlichkeit erschwert derzeit den Bau flexibler ferroelektrischer LC-Displays und verteuert die Herstellung konventioneller, d.h. mit Glas oder starren Kunststoffplatten versehenen, Displays.

Wegen ihrer geringeren Deformierbarkeit und besseren Verarbeitbarkeit ist die Verwendung polymerer Flüssigkristalle vorteilhaft.

Polymere Flüssigkristalle wurden schon mehrfach beschrieben (z.B. J. Polym.Sci. Polym.Lett., Ed. 13, 243 (1975); Polym.Bull. 6, 309 (1982)). In EP 228 703 und EP 271 900 sind bereits flüssigkristalline Polymere auf der Basis von Polyacrylaten und Polymethacrylaten beschrieben, deren Seiten ketten aus einer Spacereinheit, einer mesogenen Komponente und einem chiralen, offenkettigen Struklurelement als Endteil bestehen, jedoch weisen alle bislang beschriebenen polymeren Flüssigkristalle für praktische Zwecke zu langsame Schaltzeilen auf.

Ferroelektrische, schnellschaltende polymere Flüssigkristalle sollten sich daher zur Herstellung flexibler Displays besonders eignen.

Besonders vorteilhaft wäre die Produktion einer Displayfolie in einem kontinuierlichen Prozeß, wozu jedoch schnell schaltende polymere ferroelektrische Flüssigkristalle benötigt werden. Daher bezieht sich die vorliegende Erfindung auf die Bereitstellung neuer polymerer, ferroelektrischer Flüssigkristalle.

Die neuen Verbindung stellen Polymere dar, die aus wiederkehrenden Einheiten der Formel (I) bestehen:

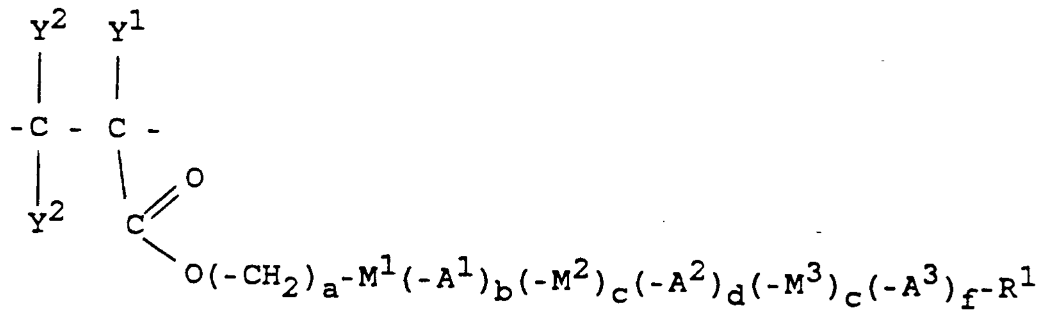

wobei

$Y^1$ = H, $CH_3$, F

$Y^2$ = H, F

$R^1$ =

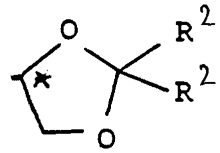

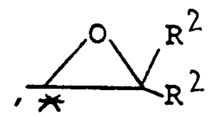

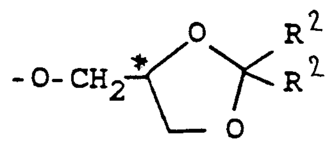

oder achirales Alkyl mit 2 bis 16 C-Atomen, wobei

$R^2$ = H,$CH_3$

a = 2 bis 20, vorzugsweise 6 bis 12

b,c,d,e,f = 0 oder 1, wobei d + e + f = 2 oder 3 ist

$A^1$,$A^2$,$A^3$ = gleich oder verschieden 1,4-Phenylen bei dem ein oder zwei H durch F,Cl und oder CN substituiert sein können, 1,4-Cyclohexylen, Pyrazin-2,5-diyl, Pyridazin-3,6-diyl, Pyridin-2,5-diyl, Pyrimidin-3,6-diyl, (1,3,4)-Thiadiazol-2,5-diyl 1,3-Dioxan-2,5-diyl, 1,3-Dithian-2,5-diyl, mit der Maßgabe, daß mindestens einer der Reste $A^1$, $A^2$ oder $A^3$ nicht gleich 1,4-Phenylen ist.

$M^2$,$M^3$ = gleich oder verschieden CO-O, O-CO, CO-S, S-CO, $CH_2O$, $OCH_2$, $CH_2CH_2$

$M^1$ =

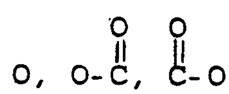

bedeuten.

Bevorzugt werden Polymere, die zu 50 bis 90 % aus Einheiten der Formel (I) bestehen, bei denen

$Y^1$ = H, $CH_3$, F

$Y^2$ = H

$R^1$ = oder

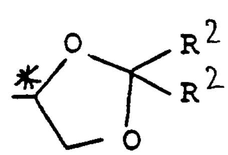

oder

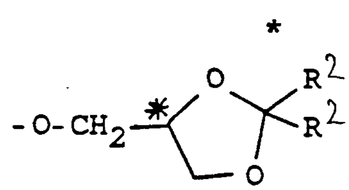

a = 6 bis 12 ist

und b,c,d,e,f,$R^2$,$A^1$,$A^2$,$A^3$,$M^1$,$M^2$,$M^3$ die oben genannten Bedeutungen haben,

sowie zu 10 bis 50 % Bus Einheiten der Formel (I) bestehen, wobei

$R^1$ ein achirales Alkyl mit 2 bis 16 C-Atomen ist und $Y^1$,$Y^2$,a,b,c,d,e,f,$A^1$,$A^2$,$A^3$,$M^1$,$M^2$,$M^3$ die oben genannten Bedeutungen haben.

Besonders bevorzugt wird ein ferroelektrisches flüssigkristallines Polymer bestehend aus Einheiten der Formel (I), bei dem

$Y^1$ = H,$CH_3$

$Y^2$ = H

a = 6 bis 12

$A^1$,$A^2$,$A^3$ = gleich oder verschieden 1,4-Phenylen, bei dem ein oder zwei H durch F, Cl und/oder CN substituiert sein können, 1,4-Cyclohexylen, Pyrazin-2,5-diyl, Pyridazin-3,6-diyl, Pyridin-2,5-diyl, Pyrimidin-2,5-diyl mit der Maßgabe, daß mindestens einer der Reste $A^1$,$A^2$ oder $A^3$ nicht gleich 1,4-Phenylen ist

$M^2$,$M^3$ = gleich oder verschieden CO-O, O-CO, $CH_2O$, $OCH_2$, $CH_2CH_2$,

$M^1$ =

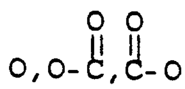

und

$R^1$ = oder

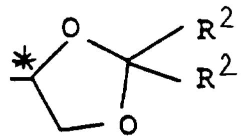

oder

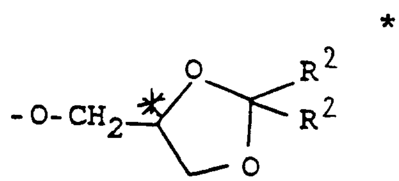

bedeuten

und

$R^2$,,b,c,d,e,f, die oben genannten Bedeutungen haben.

Besonders bevorzugt werden auch solche ferroelektrischen flüssigkristallinen Polymere der Formel (I), bei denen die Gruppierung $(-A^1)_b(-M^2)_c(-A^2)_d(-M^3)_e(-A^3)_f$- bedeutet:

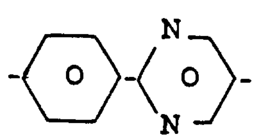 , 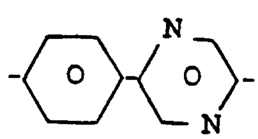 , 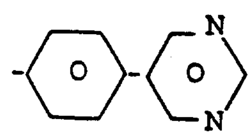 ,

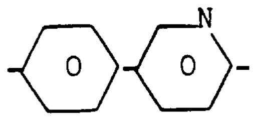
,
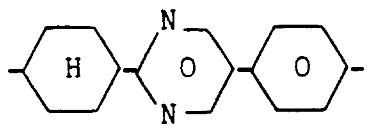

Die Herstellung der genannten Polymere erfolgt durch radikalische Polymerisation von Monomeren der Formel (II)

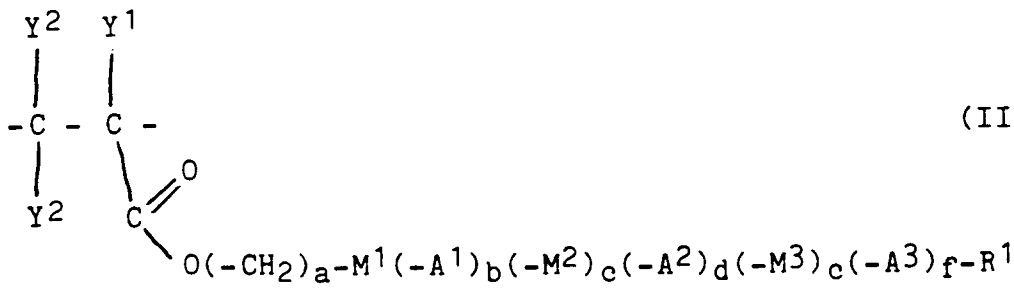
(II)

Die Monomere sind nach bekannten Verfahren darstellbar.

**Beispiel 1**

Darstellung des Monomeren ($M_1$)

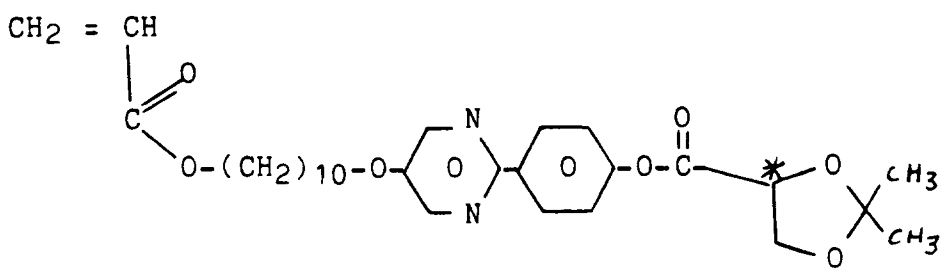
($M_1$)

Vorschrift:

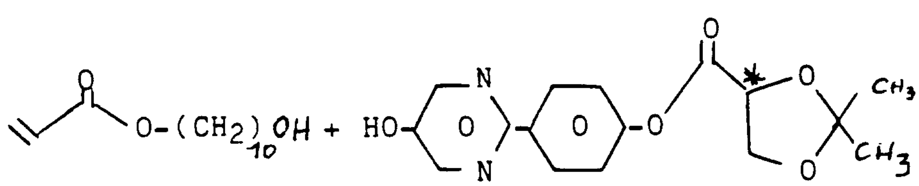

B A

Zu einer Lösung von 1.26 g (4 mmol) A, 0.91 g (4 mmol) B und 1.05 g (4 mmol) Triphenylphosphin wird eine Lösung von 0.70 g (4 mmol) Diethylazodicarboxylat in 20 ml THF getropft. Nach Rühren über Nacht wird der Niederschlag abgetrennt, die Lösung eingeengt und der Rückstand an Flash-Kieselgel chromatographiert (Laufmittel $CH_2Cl_2$/Petrolether).
Ausbeute: 700 mg; Schmp. 83.5 - 84° C; $[\alpha]_D^{RT}$ = +6.9°
(1.08 in $CHCl_3$).

Polymerisation (P1)

6.36 mg (1.21 mmol) des vorstehenden Monomeren ($M_1$) werden mit 2 mg (0.012 mmol) AIBN in 6 ml trockenem THF 18 h bei 60° C polymerisiert. Anschließend wird mit Methanol ausgefällt und mehrmals umgefällt.
Ausbeute: 480 mg (75 %).
Molmasse $M_w$ = 7.600 g/mol
Molekular-dispersität E = $M_w/M_n$ = 1,38
Das flüssigkristalline Polymer weist folgende Phasenfolge auf:
$T_G$ 50 $S_C$* 97,5 $S_A$ 113 / (DSC-Messung)
Die Abhängigkeit der Schaltzeiten von der Temperatur verdeutlicht folgende Tabelle (Messungen bei 25 Volt; 2µm-Zelle)

| T [°C] | 55 | 60.2 | 66.0 | 69.9 | 74.8 | 80.4 | 85 |
|---|---|---|---|---|---|---|---|
| τ [ms] | 53 | 28 | 10 | 5 | 3.2 | 1.4 | 1.5 |

Beispiel 2

Darstellung des Monomeren ($M_2$)

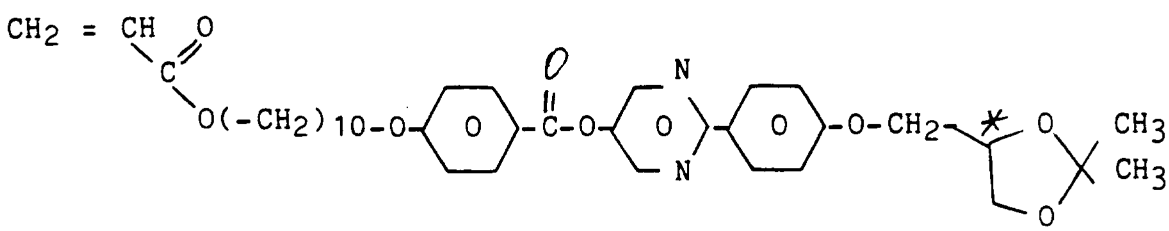

($M_2$)

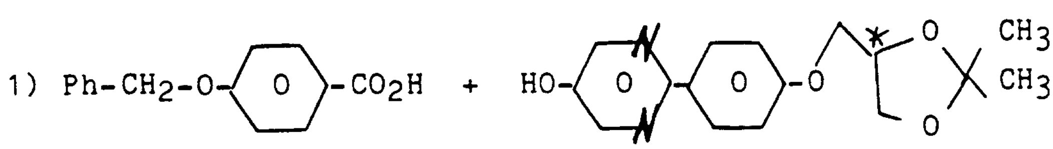

A B

456 mg (2 mmol) A und 609 mg (2 mmol) B werden mit 412 mg (2 mmol) Dicyclohexylcarbodiimid und 37 mg (0.3 mmol) Dimethylaminopyridin in 10 ml absol THF 24 h bei Raumtemperatur gerührt. Anschließend wird filtriert, das Filtrat im Vakuum eingedampft und der Rückstand chomatographisch gereinigt.
Ausbeute: 1.0 g (97 %).

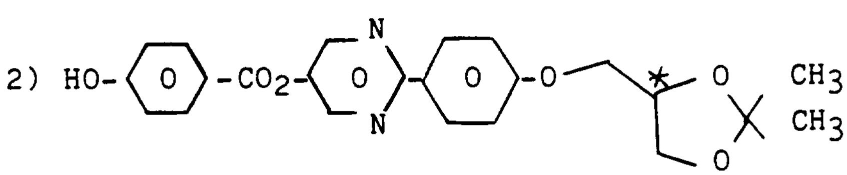

C

Das Produkt der vorstehenden Reaktion wird in THF/EtOH (4:1) in Gegenwart von Pd/Kohle hydriert. Nach Abfiltrieren des Katalysators wird das Lösungsmittel abgezogen und aus Aceton umkristallisiert.
Ausbeute: 300 mg; Schmp. 208° C.

3) 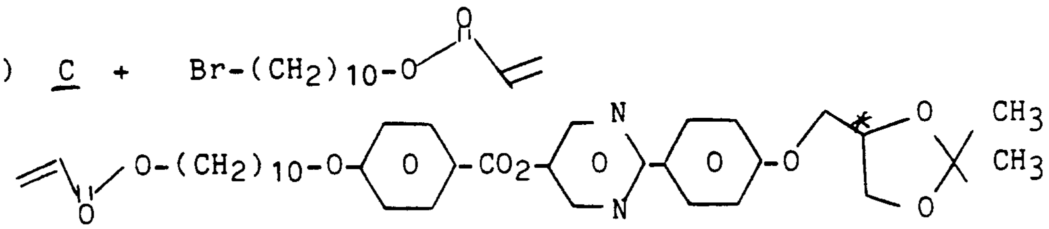

1.69 g (4 mmol) C, 0.92 g (4 mmol) Acrylsäure-ω-bromdecylester, 1.05 g (4 mmol) Triphenylphosphin und 0.7 g (4 mmol) DEAD werden in 50 ml THF 40 h bei Raumtemperatur umgesetzt. Das Rohprodukt wird mit $CH_2Cl_2$ als Laufmittel chromatographisch gereinigt und aus Aceton umkristallisiert.
Ausbeute: 1.32 g (52 %); Schmp. 115° C; $[\alpha]_D^{20}$ + 4.2°
(C = 1.15 in $CHCl_3$).

Polymerisation ($P_2$)

500 g Monomer und 2 mg AIBN werden in 6 ml THF 17 bei 60° C unter $N_2$-Schutz gerührt. Das Polymer wird mit Methanol ausgefällt und mehrmals aus THF mit Methanol umgefällt. Ausbeute: 340 mg;
$M_w$ = 9.500
E = 1.33
Das Polymer zeigt folgende Phasenfolge:
(DSC): $T_G$ 50 $S_X$ 127.5 $S_C^*$ 187 S 220 I
Das flüssigkristalline Polymer ist im Temperaturbereich von 120° C - 170° C elektrooptisch schaltbar.

## Patentansprüche

**1.** Ferroelektrisches flüssigkristallines Polymer bestehend aus wiederkehrenden Einheiten der Formel (I)

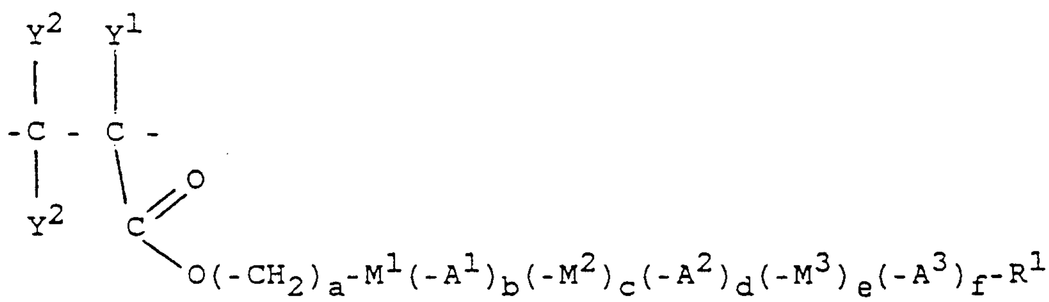

wobei
$Y^1$ = H, $CH_3$, F
$Y^2$ = H, F
$R^1$ =

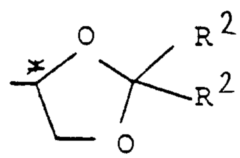 , 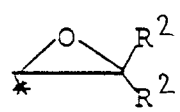

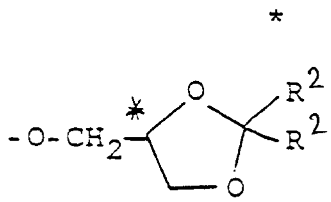

oder achirales Alkyl mit 2 bis 16 C-Atomen, wobei

$R^2$ = H, $CH_3$

a = 2 bis 20, vorzugsweise 6 bis 12

b,c,d,e,f = 0 oder 1, wobei d + e + f = 2 oder 3 ist

$A^1$,$A^2$,$A^3$ = gleich oder verschieden 1,4-Phenylen bei dem ein oder zwei H durch F,Cl und oder CN substituiert sein können, 1,4-Cyclohexylen, Pyrazin-2,5-diyl, Pyridazin-3,6-diyl, Pyridin-2,5-diyl, Pyrimidin-3,6-diyl, (1,3,4)-Thiadiazol-2,5-diyl, 1,3-Dioxan-2,5-diyl, 1,3-Dithian-2,5-diyl, mit der Maßgabe, daß mindestens einer der Reste $A^1$, $A^2$ oder $A^3$ nicht gleich 1,4-Phenylen ist.

$M^2$,$M^3$ = gleich oder verschieden CO-O, O-CO, CO-S, S-CO, $CH_2O$, $OCH_2$, $CH_2CH_2$

$M^1$ =

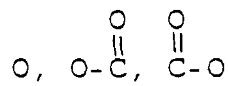

bedeuten.

2. Ferroelektrisches flüssigkristallines Polymer nach Anspruch 1, dadurch gekennzeichnet, daß es zu 50 bis 90 % aus Einheiten der Formel (I) besteht, bei denen

$Y^1$ = H, $CH_3$, F

$Y^2$ = H, F

$R^1$ =

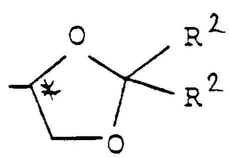

oder

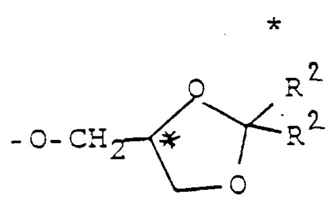

a = 6 bis 12 ist

und b,c,d,e,f $R^2$,$A^1$,$A^2$,$A^3$,$M^1$,$M^2$,$M^3$ die gleichen Bedeutungen wie in Anspruch 1 haben,

sowie zu 10 bis 50 % aus Einheiten der Formel (I) besteht, bei denen

$R^1$ ein achirales Alkyl mit 2 bis 16 C-Atomen ist und $Y^1$,$Y^2$,a,b,c,d,e,f,$A^1$,$A^2$,$A^3$,$M^1$,$M^2$,$M^3$ die oben genannten Bedeutungen haben.

**3.** Ferroelektrisches flüssigkristallines Polymer nach Anspruch 1, dadurch gekennzeichnet, daß

$Y^1$ = H,$CH_3$

$Y^2$ = H

a = 6 bis 12

$A^1$,$A^2$,$A^3$ = gleich oder verschieden 1,4-Phenylen, bei dem ein oder zwei H durch F, Cl und/oder CN substituiert sein können, 1,4-Cyclohexylen, Pyrazin-2,5-diyl, Pyridazin-3,6-diyl, Pyridin-2,5-diyl, Pyrimidin-2,5-diyl mit der Maßgabe, daß mindestens einer der Reste $A^1$,$A^2$ oder $A^3$ nicht gleich 1,4-Phenylen ist

$M^2$,$M^3$ = gleich oder verschieden CO-O, O-CO, $CH_2O$, $OCH_2$, $CH_2CH_2$,

$M^1$ =

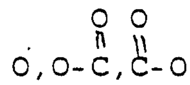

und

$R^1$ =

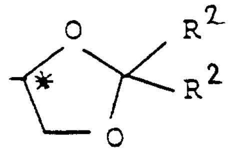

oder

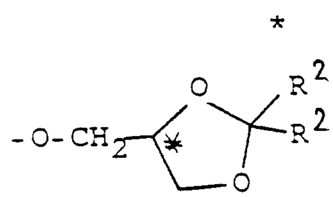

bedeuten

und

$R^2$,b,c,d,e,f die gleichen Bedeutungen wie in Anspruch 1 haben.

**4.** Ferroelektrisches flüssigkristallines Polymer nach Anspruch 3, dadurch gekennzeichnet, daß die Gruppierung $(-A^1)_b(-M^2)_c(-A^2)_d(-M^3)_e(-A^3)_f$- bedeutet:

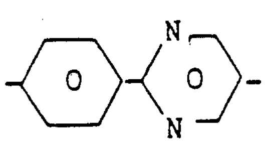 , 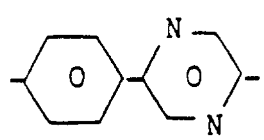 , 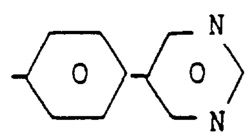 ,

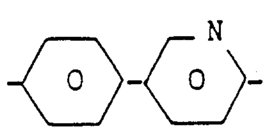 , 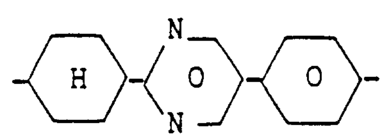

**5.** Ferroelektrisches flüssigkristallines Polymer nach Anspruch 2, dadurch gekennzeichnet, daß die Gruppierung $(-A^1)_b(-M^2)_c(-A^2)_d(-M^3)_e(-A^3)_f$- bedeutet:

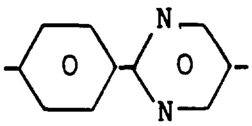 , 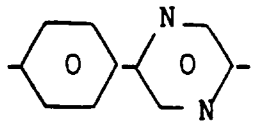 , 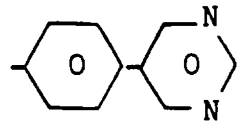 ,

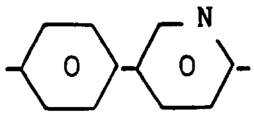 , 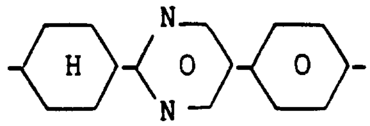

6. Verfahren zur Herstellung von Polymeren nach einem der Ansprüche 1 bis 5, dadurch gekennzeichnet, daß man Verbindungen der Formel (II)

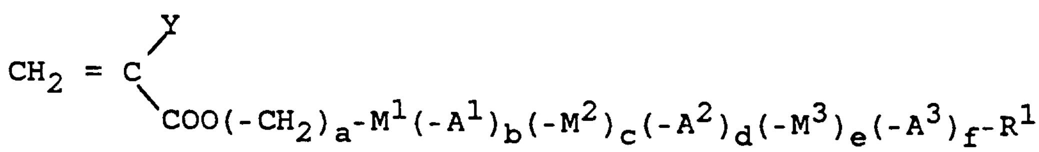

mittels eines Radikalbildners polymerisiert, wobei $Y^1$,$Y^2$,$M^1$,$M^2$,$M^3$,$A^1$,$A^2$,$A^3$,$R^1$,$R^2$,a,b,c,d,e,f,g,h die jeweils in den Ansprüchen 1 bis 5 angegebenen Bedeutungen haben.

7. Verwendung von ferroelektrischen flüssigkristallinen Polymeren nach einem der Ansprüche 1 bis 5 in elektrooptischen Bauteilen.

8. Elektrooptisches Bauteil enthaltend ein Polymer nach einem der Ansprüche 1 bis 5.

**Claims**

1. A ferroelectric, liquid-crystalline polymer composed of repeating units of the formula (I)

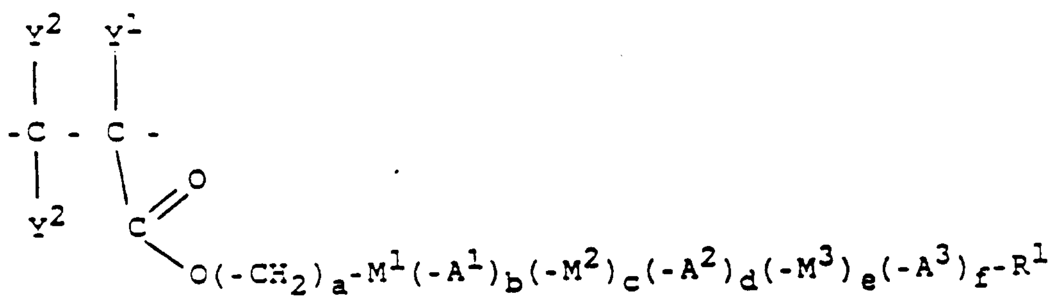

in which

$Y^1$ = H, $CH_3$ or F

$Y^2$ = H or F

$R^1$ =

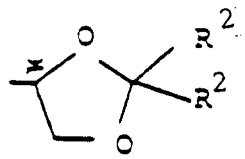, 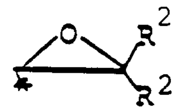

,

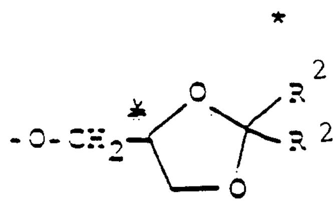

or an achiral alkyl having 2 to 16 carbon atoms, where

$R^2$ = H or $CH_3$

a = 2 to 20, preferably 6 to 12

b,c,d,e and f = 0 or 1, where d + e + f = 2 or 3

$A^1$,$A^2$ and $A^3$ = identical or different 1,4-phenylene in which one or two hydrogen atoms may be substituted by F, Cl and/or CN, 1,4-cyclohexylene, 2,5-pyrazinediyl, 3,6-pyridazinediyl, 2,5-pyridinediyl, 3,6-pyrimidinediyl, 1,3,4-thiadiazole-2,5-diyl, 1,3-dioxan-2,5-diyl, or 1,3-dithian-2,5-diyl, with the proviso that at least one of the radicals $A^1$, $A^2$ or $A^3$ is not 1,4-phenylene.

$M^2$ and $M^3$ = identical or different CO-O, O-CO, CO-S, S-CO, $CH_2O$, $OCH_2$ or $CH_2CH_2$

$M^1$ =

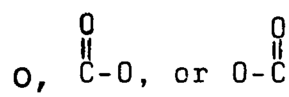

2. A ferroelectric, liquid-crystalline polymer as claimed in claim 1, wherein it is composed of 50 to 90 % of units of the formula (I) in which

$Y^1$ = H, $CH_3$ or F

$Y^2$ = H or F

$R^1$ =

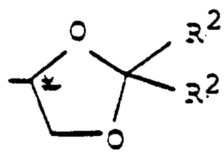

or

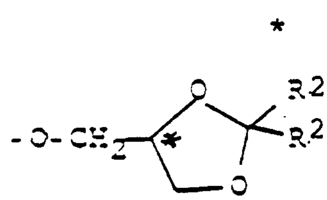

a = 6 to 12

and b,c,d,e,f,$R^2$,$A^1$,$A^2$,$A^3$,$M^1$,$M^2$ and $M^3$ have the same meanings as in claim 1,

and also of 10 to 50 % of units of the formula (I) in which
$R^1$ is an achiral alkyl having 2 to 16 carbon atoms and $Y^1$,$Y^2$,a,b,c,d,e,f,$A^1$,$A^2$,$A^3$,$M^1$,$M^2$ and $M^3$ have the meanings given above.

**3.** A ferroelectric, liquid-crystalline polymer as claimed in claim 1, wherein

| | |
|---|---|
| $Y^1$ = | H or $CH_3$ |
| $Y^2$ = | H |
| a = | 6 to 12 |
| $A^1$,$A^2$ and $A^3$ = | identical or different 1,4-phenylene in which one or two hydrogen atoms may be substituted by F, Cl and/or CN, 1,4-cyclohexylene, 2,5-pyrazinediyl, 3,6-pyridazinediyl, 2,5-pyridinediyl, 2,5-pyrimidinediyl, with the proviso that at least one of the radicals $A^1$, $A^2$ and $A^3$ is not 1,4-phenylene |
| $M^2$ and $M^3$ = | identical or different CO-O, O-CO, $CH_2O$, $OCH_2$ or $CH_2CH_2$, |
| $M^1$ = | 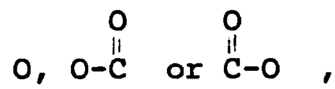 and |
| $R^1$ = | 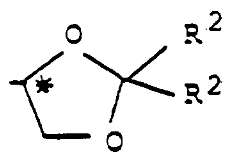 or 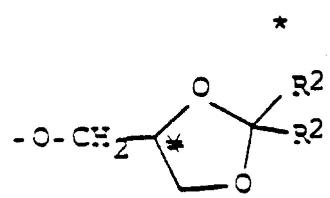 |

and
$R^2$,b,c,d,e and f have the same meanings as in claim 1.

**4.** A ferroelectric, liquid-crystalline polymer as claimed in claim 3, wherein the group $(-A^1)_b(-M^2)_c(-A^2)_d(-M^3)_e(-A^3)_f$-denotes:

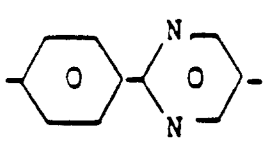 , 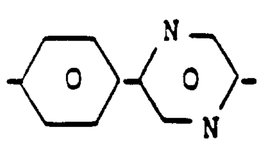 , 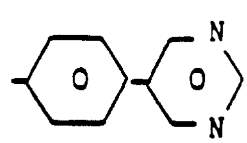 ,

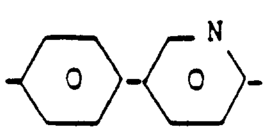 , 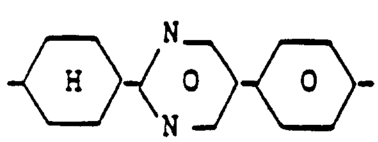

**5.** A ferroelectric, liquid-crystalline polymer as claimed in claim 2, wherein the group $(-A^1)_b(-M^2)_c(-A^2)_d(-M^3)_e(-A^3)_f$- denotes:

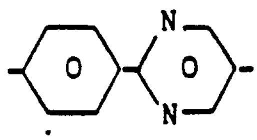 , 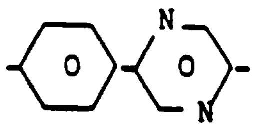 , 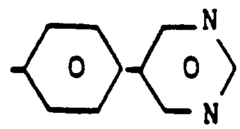 ,

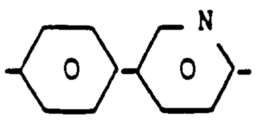 , 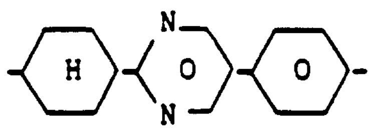

6. A process for the preparation of a polymer as claimed in one of claims 1 to 5, which comprises polymerizing a compound of the formula (II)

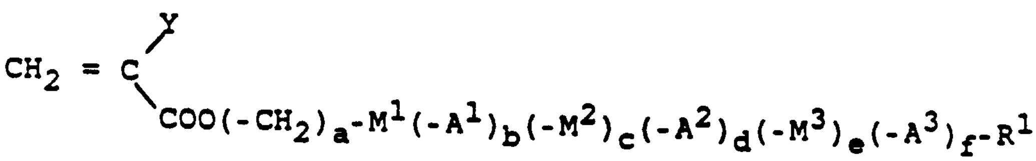

using a free-radical initiator, where $Y^1$,$Y^2$,$M^1$,$M^2$,$M^3$,$A^1$,$A^2$,$A^3$,$R^1$,$R^2$,a,b,c,d,e and f each have the meaning given in claims 1 to 5.

7. The use of a ferroelectric, liquid-crystalline polymer as claimed in one of claims 1 to 5 in electrooptical components.

8. An electrooptical component containing a polymer as claimed in one of claims 1 to 5.

**Revendications**

1. Polymère en cristaux liquides ferroélectriques formé de motifs récurrents de formule I ci-dessous :

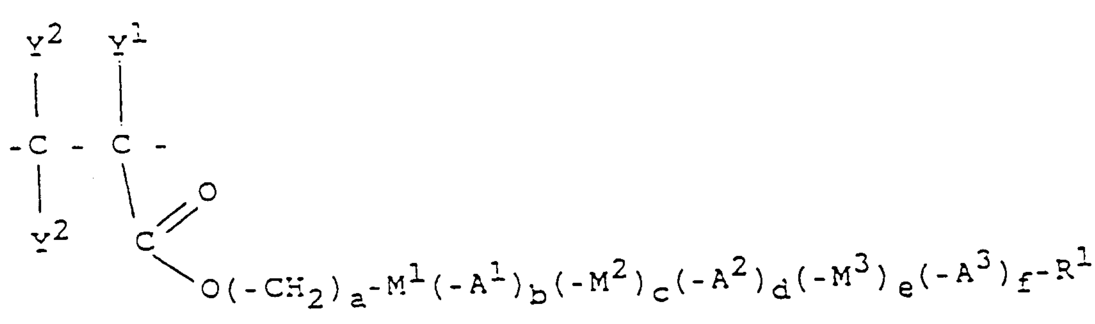

dans laquelle

$Y^1$ = H, $CH_3$, F

$Y^2$ = H, F

$R^1$ =

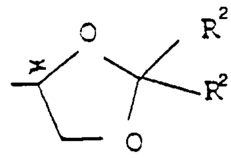
,
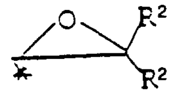

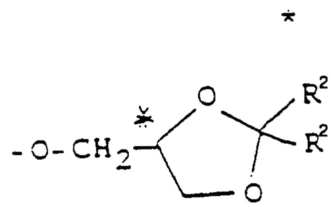

ou un alkyle achiral ayant de 2 à 16 atomes de carbone,
$R^2$ étant l'hydrogène ou le groupe $CH_3$,

a = 2 à 20, de préférence 6 à 12,

b,c,d,e,f = 0 ou 1, la somme d + e + f étant égale à 2 ou 3,

$A^1$, $A^2$ et $A^3$, qui peuvent être identiques ou différents les uns des autres, représentent des groupes 1,4-phénylène dont un ou deux atomes d'hydrogène peuvent être remplacés par des atomes de fluor ou de chlore ou par le groupe CN, ou des groupes 1,4-cyclohexylène, pyrazine-2,5-diyl, pyridazine-3,6-diyl, pyridine-2,5-diyl, pyrimidine-3,6-diyl, (1,3,4)-thiadiazole-2,5-diyl, 1,3-dioxanne-2,5-diylou 1,3-dithianne-2,5-diyl, avec la condition que l'un au moins des radicaux $A^1$, $A^2$ et $A^3$ ne soit pas un groupe 1,4-phénylène,

$M^2$ et $M^3$, qui peuvent être identiques ou différents, représentent CO-O, O-CO, CO-S, S-CO, $CH_2O$, $OCH_2$ ou $CH_2CH_2$ et

$M^1$ représente O,

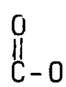 ou 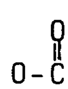

**2.** Polymère en cristaux liquides ferroélectriques selon la revendication 1, caractérisé en ce qu'il est formé pour 50 à 90 % de motifs de formule I dans lesquels

$Y^1$ = H, $CH_3$, F

$Y^2$ = H, F

$R^1$ =

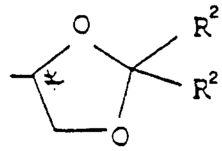

ou

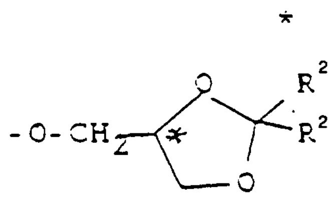

a = 6 à 12,

et les autres symboles ont les mêmes significations qu'à la revendication 1,

et pour 10 à 50 % de motifs de formule I dans lesquels $R^1$ est un alkyle achiral ayant de 2 à 16 atomes de carbone et les autres symboles ont les significations précédemment indiquées.

**3.** Polymère en cristaux liquides ferroélectriques selon la revendication 1, caractérisé en ce que : $Y^1$ = H, $CH_3$,

| | |
|---|---|
| $Y^2$ = | H, |
| a = | 6 à 12, |
| $A^1$, $A^2$ et $A^3$, | identiques ou différents, sont chacun un groupe 1,4-phénylène dont un ou deux atomes d'hydrogène peuvent être remplacés par le fluor, le chlore et/ou un groupe CN, ou bien un groupe 1,4-cyclohexylène, pyrazine-2,5-diyl, pyridazine-3,6-diyl, pyridine-2,5-diyl ou pyrimidine-2,5-diyl, avec la condition que l'un au moins des radicaux $A^1$, $A^2$ et $A^3$ ne soit pas un groupe 1,4-phénylène, |
| $M^2$ et $M^3$, | identiques ou différents, représentent CO-O, O-CO, $CH_2O$, $OCH_2$ ou $CH_2CH_2$, |
| $M^1$ | représente O, |

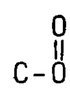 ou 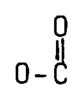

et

$R^1$ un groupe

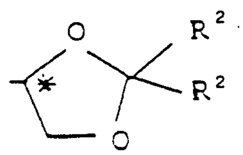

ou

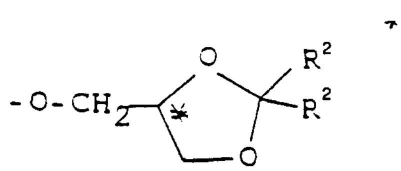

et les autres symboles ont les mêmes significations qu'à la revendication 1.

**4.** Polymère en cristaux liquides ferroélectriques selon la revendication 3, caractérisé en ce que le groupement $(-A^1)_b(-M^2)_c(-A^2)_d(-M^3)_e(-A^3)_{f-}$ est l'un des suivants :

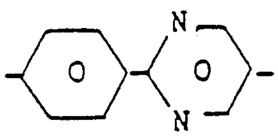 , 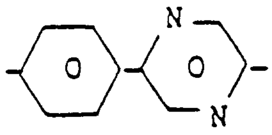 , 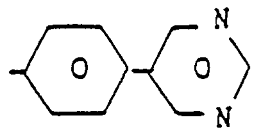 ,

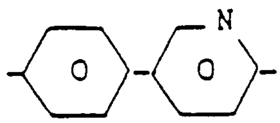 , 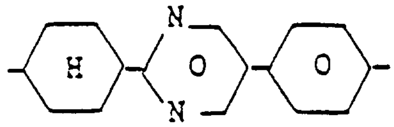

**5.** Polymère en cristaux liquides ferroélectriques selon la revendication 2, caractérisé en ce que le groupement $(-A^1)_b(-M^2)_c(-A^2)_d(-M^3)_e(-A^3)_{f}-$ est l'un des suivants :

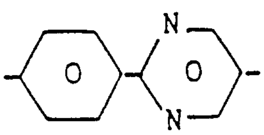 , 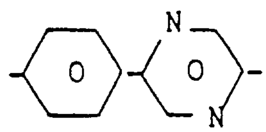 , 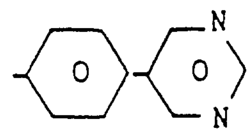 ,

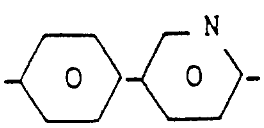 , 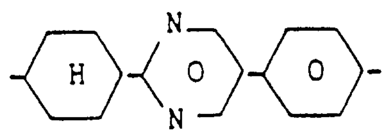

**6.** Procédé de préparation de polymères selon l'une des revendications 1 à 5, procédé caractérisé en ce que l'on polymérise des composés de formule II :

$$CH_2 = C\begin{cases} Y \\ COO(-CH_2)_a-M^1(-A^1)_b(-M^2)_c(-A^2)_d(-M^3)_e(-A^3)_f-R^1 \end{cases}$$

avec un formateur de radicaux libres, les divers symboles ayant les significations qui ont été indiquées respectivement aux revendications 1 à 5.

**7.** L'emploi de polymères en cristaux liquides ferroélectriques selon l'une des revendications 1 à 5 dans des composants électro-optiques.

**8.** Composants électro-optiques comprenant un polymère selon l'une des revendications 1 à 5.